# EUROPEAN PATENT SPECIFICATION

(11) **EP 1 407 198 B1**
(45) Date of publication and mention of the grant of the patent: **18.10.2006**
(21) Application number: 02745632.6
(22) Date of filing: 15.07.2002
(51) Int. Cl.: F24F 5/00, F24D 5/00, F24F 7/02

(54) **VENTILATING SYSTEM**
LÜFTUNGSANLAGE
SYSTEME DE VENTILATION

(30) Priority: 14.07.2001 GB 0117220
(43) Date of publication of application: 14.04.2004
(73) Proprietor: NuAire Limited, Caerphilly Mid Glamorgan CF8 1XH (GB)
(72) Inventor: BRADLEY, John, Morganstown, Cardiff CF4 8EA (GB); BIGGS, Colin, Taffs Well, Cardiff CF15 7PS (GB); JENKINS, Richard, Penarth CF64 3LN (GB); NGAI, James, Caerphilly CF83 2BE (GB); PRYS, Ioan, Canton, Cardiff CF1 9NH (GB); HUXTABLE, Mark, Newport, Gwent NP10 9GR (GB); GLOVER, Wayne, Aberdare, Mid Glamorgan CF44 0GW (GB); CURRIE, John, Edinburgh EH12 5PL (GB); QUIGLEY, William, Templeogue, Dublin 16 (IE); FORKIN, Mark, Lehaunstown, Dublin 18 (IE)
(74) Representative: Gibson, Stewart Harry
(86) International application number: PCT/GB2002/003247
(87) International publication number: WO 2003/008874

(56) References cited:
- EP-A- 0 033 145
- EP-A- 0 047 982
- WO-A-00/11410
- DE-A- 2 512 475
- DE-A- 3 819 995
- DE-A- 19 611 136
- FR-A- 2 516 639
- FR-A- 2 548 336
- US-A- 2 680 565
- US-A- 4 478 210
- US-A- 4 949 902

## Description

The present invention relates to a system for ventilating a dwelling or other building.

It is known to provide a dwelling with a ventilation system which comprises a fan disposed in the loft or roof space of the building and arranged to discharge air into the living or accommodation space of the building. This places the accommodation space under a slight positive pressure, which forces air to flow out of the building through gaps in windows, doors etc. The effect is that the accommodation space is subjected continuously to a ventilating flow of air, which acts to remove or prevent the build up of condensation and also to remove or prevent the possible build up of radon gas. Such ventilating systems are often installed in dwellings to overcome the tendency in some buildings for damp conditions to develop or possibly radon gas to accumulate.

Our International patent application WO 00/11410 discloses a ventilating system which is arranged to draw in air from selected different locations, according to whether it is desired to deliver warm or cool air into the accommodation space of the building.

EP-A-0,047,982 discloses a ventilation system which is arranged to draw in air from the outside of the building and to deliver this air into the accommodation space of the building: this system also includes means for heating air from solar radiation and a heat exchanger through which this solar-heated air may be passed in order to heat water for a hot water supply of the building.

We have now devised an improved ventilation system, which utilises available warm air to heat water for the building.

In accordance with the present invention, there is provided a building with a ventilation system, the ventilation system comprising FAN means arranged to draw air in from at least one location exterior of the accommodation space of the building and deliver said air into said accommodation space, means for heating air from solar radiation, a heat exchanger, means for passing the solar-heated air through said heat exchanger to heat water for a hot water supply of the building, and a controller for controlling the operation of the ventilation system and able to cause air to be drawn in from said location exterior of the accommodation space of the building, then to pass through said solar radiation heating means, before delivery into said accommodation space, characterised in that said controller is able to cause air to be drawn in from the roof space of the building, then to pass through said solar radiation heating means, before delivery into said accommodation space.

This ventilation system is able to deliver air into the accommodation space of the building and assist in either warming or cooling the accommodation space, depending upon the location from which the air is drawn in. When there is sufficient solar radiation, the solar-heated air may be passed through the heat exchanger to heat water for the hot water supply of the building. When the solar radiation is insufficient for this purpose, it may still be sufficient to warm air, drawn into the system from one or more of the inlet locations and passed through the solar air-heating means, before this warmed air is delivered into the accommodation space.

The system is preferably arranged so that it can return, to the solar air-heating means, the air passed through the heat exchanger, in a closed-circuit circulation path.

Preferably, however, the system comprises control means operable, under predetermined conditions, to pass at least some of the air, drawn in from the selected locations, through the heat exchanger (preferably via the solar air-heating means), before it is delivered into the accommodation space.

Preferably the solar air-heating means comprises an enclosure, preferably in the form of one or more generally planar panels, for positioning on the exterior surface of the roof of the building.

Preferably the ventilation system is arranged to draw in air, selectively, either from within the loft or roof space of the building, or from a location exterior of the building, for example under the eaves. The ventilation system may be arranged to draw in air from both such locations simultaneously, under predetermined conditions.

The control means of the ventilation system is preferably arranged to monitor the temperature of the air available at the respective inlet locations, and determine from which location or locations to draw in air, according to the temperature desired in, or to be delivered to, the accommodation space. Preferably a selector is provided in the accommodation space, to set the desired temperature, and the control means is arranged to monitor the actual temperature in the accommodation space and the temperature of the air being delivered into the accommodation space, to determine whether warm or cool air is required to be drawn in, which available location or locations to draw it from, and at what rate of flow.

The control means is also arranged to monitor the temperature of the air available from the solar air-heating means, and determine when to circulate this air through the heat exchanger and when to pass air from the available inlet locations through the heat exchanger.

Preferably the ventilation system comprises a first fan for drawing in air from the selected exterior locations, and a second fan for causing air to flow through the heat exchanger from the solar air-heating means.

The system may be arranged to maintain a positive air pressure within the building. It may be arranged to recirculate a proportion of air from within the building, possibly so that the air pressure within the building is neutral: in this case a further heat exchanger may be provided to exchange heat between the air being delivered into the accommodation space and the air being extracted therefrom.

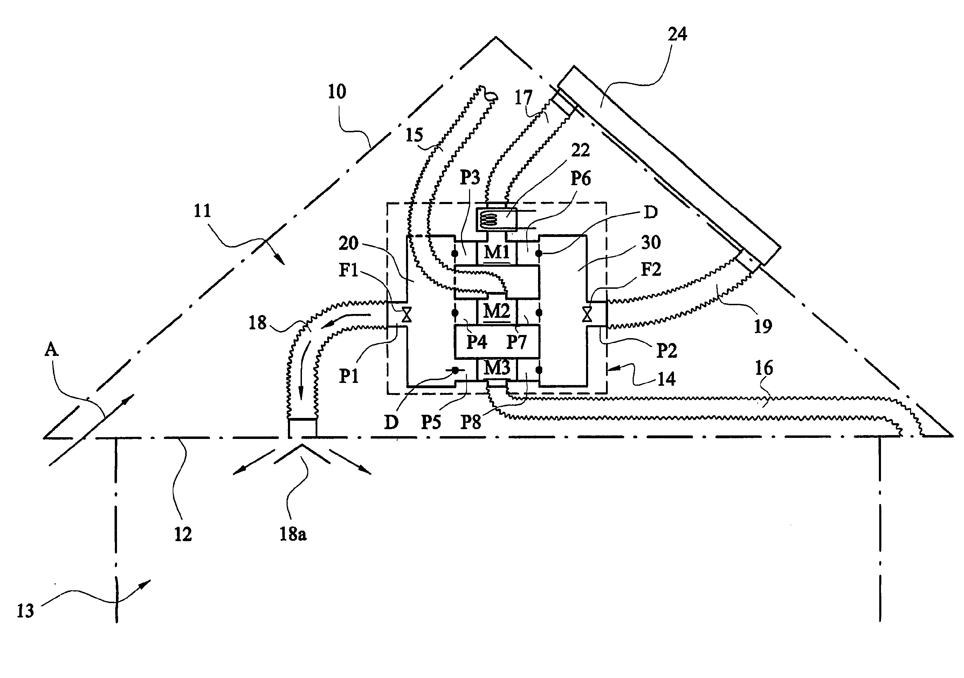

An embodiment of the present invention will now be described by way of example only and with reference to the accompanying drawing, the single Figure of which is a schematic diagram of a ventilating system in accordance with the present invention, installed in the loft of a dwelling.

Referring to the drawing, there is shown the apex roof 10 of a house or other building, the apex roof providing a loft or roof space 11 above the ceiling 12 to the accommodation space 13 of the building: typically the accommodation space comprises a number of individual rooms. Further, the building is equipped with a hot water system, for supplying hot water to a number of hot water outlets such as the taps of a kitchen sink, a bath or wash basin and/or a shower.

A ventilating unit 14 in accordance with the present invention is disposed in the roof space 11 of the building and has a number of ducts 15, 16, 17, 18 and 19 coupled to it. The ventilating unit 14, in the example shown, comprises two air handling units 20, 30 each comprising an enclosure formed on one side with a single port (P1 and P2, respectively) and on its opposite side with three ports (P3, P4, P5 and P6, P7, P8 respectively). The ports P3 and P6 of the respective air handling units are coupled to a common manifold M1, to which the duct 17 is also coupled, via a heat exchange 22. The ports P4 and P7 of the respective air handling units are coupled to a common manifold M2, to which the inlet duct 15 is also coupled. The ports P5 and P8 of the respective air handling units are coupled to a common manifold M3, to which the inlet duct 16 is also coupled.

The ports P1, P2 of the respective air handling units are provided with fans F1, F2, each fan having an air filter (not shown). The ports P3 to P8 of the air handling units are each provided with an electrically controlled damper D, for opening or closing the respective port.

The port P1 of the air handling unit 20 has the duct 18 coupled to it, this duct being coupled at its other end to one or more diffusers 18a on the ceiling 12 of the accommodation space 13 of the building, in order to deliver a flow of air into the accommodation space, with the effect of maintaining a positive air pressure within the building. The fan F1 serves to deliver the air through the duct 18, the air being drawn into the ventilating unit 14 through inlet duct 15 and/or through inlet duct 16, as will be described below.

A solar air-heating unit, comprising a generally planar enclosure 24, is mounted on the exterior roof surface, preferably on the most southerly-facing side of the building. The outlet duct 19 of the ventilating unit is coupled at one end to the port P2 of the air handling unit 30, and at its other end to the solar air-heating enclosure 24 adjacent its lower end: the duct 17 is coupled at one end to the enclosure 24 adjacent its upper end and, at its other end, to the heat exchanger 22. The heat exchanger 22 is arranged for heating water for the hot water supply system of the building. The fan F2 of the air handling unit 30 is arranged for circulating air through the solar air-heating enclosure 24, then through the heat exchanger 22 and either back to the air handling unit 30 or to the air handling unit 20.

The ventilating unit 14 further comprises a controller (not shown) which serves to monitor the temperature of the air available at the inlets to the ducts 15, 16 and 17, the air temperature in the accommodation space 13 of the building, the temperature of air being delivered into the accommodation space, and a desired temperature set by a manual selector provided in the accommodation space. The controller then determines whether to draw inlet air from within the roof space (via inlet duct 15), or from outside the building (via inlet duct 16), or a mixture of air from both locations: the controller then controls the dampers D of the ports P3-P8 accordingly.

In general, the ventilating unit serves to deliver warm air into the accommodation space, during periods of cold or cool ambient conditions. For example in winter, the unit will serve to draw in warm air from the roof space, through inlet duct 15, the fan F1 then delivering this air into the accommodation space through the outlet duct 18: it will be noted that the air in the roof space is replenished by air entering under the eaves (as indicated at A), this air becoming warmed by solar energy and by heat rising from the accommodation space and into the roof space. On a sunny winter's day, the controller will find that the air within the solar air-heating enclosure 24 is warmed by solar radiation: in this case, the air drawn into the manifold M2 from inlet duct 15 is circulated, by the fan F2, through the enclosure 24 and back into the air handling unit 20, before being delivered into the accommodation space via duct 18. Even on a sunny day, the air from the solar air-heating enclosure may not be warm enough to heat water in the heat exchanger 22, so no water is passed through the heat exchanger under these conditions.

In spring or autumn, for example, the controller may act so that the ventilation unit draws in air through the inlet duct 15 and delivers this into the accommodation space, and at the same time circulates heated air, from the solar air-heating enclosure 24, through the heat exchanger 22, the air handling unit 30 and back through duct 19 to the enclosure 24. In this way, warm air is delivered into the accommodation space, whilst solar-heated air is used to heat water for the hot water supply of the building.

The air delivered into the accommodation space may be drawn in through both the duct 15 and the duct 16 (which draws air in from under the eaves of the building). For example, warm air from within the roof space is then mixed with cool air from under the eaves, to achieve an intermediate temperature for the air delivered into the accommodation space. At other times, for example in the summer during the day, cool air may be drawn in from under the eaves only (i.e. through duct 16 only), for delivery into the accommodation space: simultaneously, air heated in the solar air-heating enclosure 24 may be circulated through the heat exchange 22, as described above, to the heat water for the hot water supply.

At night in the summer, cool air from under the eaves (and drawn in through duct 16) may be passed through the air handling unit 30, the solar air-heating enclosure 24, the heat exchanger 22, and the air handling unit 20, for delivery through duct 18 into the accommodation space. Whilst in the enclosure 24, the air loses heat to the atmosphere, so that the cool air drawn in from under the eaves is further cooled before delivery into the accommodation space.

It will be appreciated that the ventilating system which has been described delivers air into the accommodation space, either to help warm the accommodation space or to help cool it, according to the requirement which varies from time-to-time. The solar air-heating enclosure is used either to further warm (or cool) the available air before delivery into the accommodation space, or to heat water (in the heat exchanger 22) for use in the hot water supply.

As previously mentioned, the ventilating system may include a fan for extracting air from within the accommodation space and for expelling this air to the exterior of the building via a further heat exchanger which serves to exchange heat between the air being expelled from the accommodation space and the air being delivered into it.

## Claims

1. A building with a ventilation system, the ventilation system comprising FAN means (F1) arranged to draw air in from at least one location (11) exterior of the accommodation space (13) of the building and deliver said air into said accommodation space (13), means (24) for heating air from solar radiation, a heat exchanger (22), means for passing the solar-heated air through said heat exchanger (22) to heat water for a hot water supply of the building, and a controller for controlling the operation of the ventilation system and able to cause air to be drawn in from said location exterior of the accommodation space (13) of the building, then to pass through said solar radiation heating means (24), before delivery into said accommodation space, **characterised in that** said controller is able to cause air to be drawn in from the roof space (11) of the building, then to pass through said solar radiation heating means (24), before delivery into said accommodation space.

2. A building with a ventilation system as claimed in claim 1, **characterised in that** said controller is able to cause air, which has passed through said heat exchanger (22) from said solar radiation heating means (24), to return to said solar radiation heating means (24).

3. A building with a ventilation system as claimed in claim 1 or 2, **characterised in that** said controller is arranged to act, under predetermined conditions, to cause at least some of the air, drawn in from said at least one location exterior of said accommodation space (13), to pass through said heat exchanger (22) prior to delivery into said accommodation space (13).

4. A building with a ventilation system as claimed in any preceding claim, **characterised in that** said controller is able to cause air to be drawn in, selectively, either from within the roof space (11) of the building or from a location exterior of the building.

5. A building with a ventilation system as claimed in claim 4, **characterised in that** said controller is arranged to act, under predetermined conditions, for air to be drawn in from both said locations simultaneously.

6. A building with a ventilation system as claimed in any preceding claim, **characterised in that** said controller is arranged to monitor the temperature of the air available at each of respective inlet locations, and determine from which location or locations to draw in air, according to the temperature desired in, or the temperature of air to be delivered to, the accommodation space (13) of the building.

7. A building with a ventilation system as claimed in claim 6, **characterised by** a selector for setting the desired temperature in the accommodation space (13) of the building, said controller being arranged to monitor the actual temperature in the accommodation space (13), and optionally the temperature of the air being delivered into said accommodation space (13), to select the available location or locations from which to draw in air and optionally to select the rate of air flow.

8. A building with a ventilation system as claimed in any preceding claim, **characterised in that** said controller is arranged to monitor the temperature of the air available from said solar radiation heating means (24) and to determine whether this air is to be circulated through the heat exchanger (22) or whether air from one or more selected inlet locations is to be passed through the heat exchanger (22).

9. A building with a ventilation system as claimed in any preceding claim, **characterised in that** said FAN means for drawing in and delivering air comprises a first fan (F1) for drawing in air from the selected inlet location or locations, and a second fan (F2) for causing air to flow through the heat exchanger (22) from the solar radiation heating means (24).

10. A building with a ventilation system as claimed in any preceding claim, **characterised in that** said controller is arranged to cause a positive air pressure to be maintained within the accommodation space (13) of the building.

11. A building with a ventilation system as claimed in any preceding, claim, **characterised by** means for withdrawing air from within the accommodation space (13) and a further heat exchanger for exchanging heat between air being withdrawn from said accommodation space (13) and the air being delivered into said accommodation space (13).

## Patentansprüche

1. Gebäude mit einem Lüftungssystem, welches Lüftungssystem Gebläsemittel (F1), die dazu ausgebildet sind, Luft von wenigstens einer Stelle (11) außerhalb des Unterkunftsraums (13) des Gebäudes hereinzuziehen und die Luft in den Unterkunftsraum (13) zu liefern, Mittel (24) zum Erwärmen der Luft durch Sonnenstrahlung, einen Wärmetauscher (22), Mittel zum Leiten der sonnenerwärmten Luft durch den Wärmetauscher (22), um Wasser für eine Warmwasserversorgung des Gebäudes zu erhitzen, und eine Steuerung oder Regelung zum Steuern oder Regeln des Betriebs des Lüftungssystems aufweist, die auch im Stande ist, zu bewirken, dass Luft von dem Ort außerhalb des Unterkunftsraums (13) des Gebäudes hereingezogen wird, dann durch die Sonnenstrahlungsheizmittel (24) vor Lieferung in den Unterkunftsraum geleitet wird, **dadurch gekennzeichnet, dass** die Steuerung im Stande ist, zu bewirken, dass Luft von dem Dachraum (11) des Gebäudes hereingezogen wird, dann durch die Sonnenstrahlungsheizmittel (24) vor Lieferung in den Unterkunftsraum geleitet wird.

2. Gebäude mit einem Lüftungssystem nach Anspruch 1, **dadurch gekennzeichnet, dass** die Steuerung im Stande ist, zu bewirken, dass Luft, die durch den Wärmetauscher (22) von den Sonnenstrahlungsheizmitteln (24) hindurchgeleitet worden ist, in die Sonnenstrahlungsheizmittel (24) zurückgeführt wird.

3. Gebäude mit einem Lüftungssystem nach Anspruch 1 oder 2, **dadurch gekennzeichnet, dass** die Steuerung dazu ausgebildet ist, unter vorbestimmten Bedingungen so zu wirken, dass wenigstens einiges der Luft, die von der wenigstens einen Stelle außerhalb des Unterkunftsraumes (13) hereingezogen wird, durch den Wärmetauscher (22) vor der Lieferung in den Unterkunftsraum (13) hindurchgeht.

4. Gebäude mit einem Lüftungssystem nach einem der vorangehenden Ansprüche, **dadurch gekennzeichnet, dass** die Steuerung im Stande ist, zu bewirken, dass Luft selektiv entweder von innerhalb des Dachraums (11) des Gebäudes oder von einer Stelle außerhalb des Gebäudes hereingezogen wird.

5. Gebäude mit einem Lüftungssystem nach Anspruch 4, **dadurch gekennzeichnet, dass** die Steuerung dazu ausgebildet ist, zu bewirken, dass unter vorbestimmten Bedingungen Luft von beiden Stellen gleichzeitig hereingezogen wird.

6. Gebäude mit einem Lüftungssystem nach einem der vorangehenden Ansprüche, **dadurch gekennzeichnet, dass** die Steuerung dazu ausgebildet ist, die Temperatur der Luft zu überwachen, die an jeder der entsprechenden Einlassstellen zur Verfügung steht, und zu bestimmen, von welcher Stelle oder welchen Stellen Luft entsprechend der Temperatur, die in den Unterkunftsraum (13) des Gebäudes erwünscht ist, oder entsprechend der Lufttemperatur hereingezogen wird, die zu dem Unterkunftsraum geliefert werden soll.

7. Gebäude mit einem Lüftungssystem nach Anspruch 6, **dadurch gekennzeichnet**, durch eine Auswahleinrichtung zum Einstellen der gewünschten Temperatur im Unterkunftsraum (13) des Gebäudes, wobei die Steuerung dazu ausgebildet ist, die tatsächliche Temperatur im Unterkunftsraum (13) zu überwachen und optional die Temperatur der Luft zu überwachen, die in den Unterkunftsraum (13) geliefert wird, um die zur Verfügung stehende Stelle oder Stellen auszuwählen, von der Luft hereingezogen werden soll und um optional die Geschwindigkeit der Luftströmung zu wählen.

8. Gebäude mit einem Lüftungssystem nach einem vorangehenden Anspruch, **dadurch gekennzeichnet, dass** die Steuerung dazu ausgebildet ist, die Temperatur der Luft zu überwachen, die von den Sonnenstrahlungsheizmitteln (24) zur Verfügung steht, und zu bestimmen, ob diese Luft durch den Wärmetauscher (22) zirkuliert werden soll oder ob Luft von einer oder mehreren ausgewählten Einlassstellen durch den Wärmetauscher (22) geleitet werden soll.

9. Gebäude mit einem Lüftungssystem nach einem vorangehenden Anspruch, **dadurch gekennzeichnet, dass** die Gebläsemittel zum Hereinziehen und Liefern von Luft ein erstes Gebläse (F1) zum Hereinziehen von Luft von der ausgewählten Einlassstelle oder den ausgewählten Einlassstellen und ein zweites Gebläse (F2) aufweisen, um zu bewirken, dass Luft durch dem Wärmetauscher (22) von den Sonnenstrahlungsheizmitteln (24) strömt.

10. Gebäude mit einem Lüftungssystem nach einem vorangehenden Anspruch, **dadurch gekennzeichnet, dass** die Steuerung so ausgebildet ist, dass sie bewirkt, dass ein positiver Luftdruck innerhalb des Unterkunftsraums (13) des Gebäudes aufrechterhalten wird.

11. Gebäude mit einem Lüftungssystem nach einem vorangehenden Anspruch, **gekennzeichnet durch** Mittel zum Abziehen von Luft von innerhalb des Unterkunftsraums (13) und einen weiteren Wärmetauscher zum Austauschen von Wärme zwischen Luft, die von dem Unterkunftsraum (13) abgezogen wird, und Luft, die in den Unterkunftsraum (13) geliefert wird.

## Revendications

1. Bâtiment équipé d'un système de ventilation, le système de ventilation comprenant un moyen à ventilateur (F1) prévu pour aspirer de l'air vers l'intérieur depuis au moins un emplacement (11) externe à l'espace de logement (13) du bâtiment, et pour délivrer ledit air dans ledit espace de logement (13), un moyen (24) permettant de chauffer l'air par le rayonnement solaire, un échangeur de chaleur (22), un moyen permettant de faire passer l'air chauffé par le soleil par ledit échangeur de chaleur (22) afin de chauffer l'eau à des fins d'alimentation en eau chaude du bâtiment, et un dispositif de commande destiné à commander le fonctionnement du système de ventilation et qui soit en mesure de faire passer l'air à aspirer depuis ledit emplacement extérieur à l'espace de logement (13) du bâtiment à travers ledit moyen de chauffage par rayonnement solaire (24) avant de le délivrer dans ledit espace de logement, **caractérisé en ce que** ledit dispositif de commande est capable de faire en sorte que l'air soit aspiré vers l'intérieur depuis l'espace de toit (11) du bâtiment, puis passe à travers ledit moyen de chauffage par rayonnement solaire (24) avant d'être délivré dans ledit espace de logement.

2. Bâtiment équipé d'un système de ventilation tel que revendiqué dans la revendication 1, **caractérisé en ce que** ledit dispositif de commande est apte à ramener l'air qui a passé par ledit échangeur de chaleur (22) depuis ledit moyen de chauffage par rayonnement solaire (24) vers ledit moyen de chauffage par rayonnement solaire (24).

3. Bâtiment équipé d'un système de ventilation tel que revendiqué dans la revendication 1 ou 2, **caractérisé en ce que** ledit dispositif de commande est prévu pour agir, dans des conditions prédéterminées, de façon à ce qu'au moins une partie de l'air aspiré vers l'intérieur depuis ledit au moins un emplacement extérieur audit espace de logement (13) passe par ledit échangeur de chaleur (22) avant d'être délivré dans ledit espace de logement (13).

4. Bâtiment équipé d'un système de ventilation tel que revendiqué dans l'une quelconque des revendications précédentes, **caractérisé en ce que** ledit dispositif de commande est capable de faire en sorte que l'air soit aspiré sélectivement, soit depuis l'espace interne du toit (11) du bâtiment ou soit depuis un emplacement extérieur au bâtiment.

5. Bâtiment équipé d'un système de ventilation tel que revendiqué dans la revendication 4, **caractérisé en** cc que ledit dispositif de commande est prévu pour agir, dans des conditions prédéterminées, pour que de l'air soit aspiré simultanément depuis lesdits deux emplacements.

6. Bâtiment équipé d'un système de ventilation tel que revendiqué dans l'une quelconque des revendications précédentes, **caractérisé en ce que** ledit dispositif de commande est prévu pour surveiller la température de l'air disponible au niveau de chacun desdits emplacements d'entrée respectifs, et pour déterminer depuis quel(s) emplacement(s) aspirer de l'air, en fonction de la température souhaitée dans, ou de la température de l'air à fournir dans, l'espace de logement (13) du bâtiment.

7. Bâtiment équipé d'un système de ventilation tel que revendiqué dans la revendication 6, **caractérisé par** un sélecteur permettant de régler la température souhaitée dans l'espace de logement (13) du bâtiment, ledit dispositif de commande étant prévu pour surveiller la température réelle dans l'espace de logement (13), et en option la température de l'air fourni dans ledit espace de logement (13), afin de sélectionner le ou les emplacement(s) disponible(s) depuis le(s)quel(s) aspirer de l'air, et éventuellement sélectionner le débit de l'écoulement d'air.

8. Bâtiment équipé d'un système de ventilation tel que revendiqué dans l'une quelconque des revendications précédentes, **caractérisé en ce que** ledit dispositif de commande est prévu pour surveiller la température de l'air disponible depuis ledit moyen de chauffage par rayonnement solaire (24) et pour déterminer si cet air doit circuler par l'échangeur de chaleur (22) ou si de l'air d'un ou de plusieurs emplacement(s) d'entrée sélectionné(s) doit passer par l'échangeur de chaleur (22).

9. Bâtiment équipé d'un système de ventilation tel que revendiqué dans l'une quelconque des revendications précédentes, **caractérisé en ce que** ledit moyen à ventilateur destiné à aspirer et fournir l'air comprend un premier ventilateur (F1) permettant d'aspirer l'air vers l'intérieur depuis le ou les emplacement(s) d'entrée sélectionné(s), et un second ventilateur (F2) permettant de faire circuler l'air par l'échangeur de chaleur (22) depuis le moyen de chauffage par rayonnement solaire (24).

10. Bâtiment équipé d'un système de ventilation tel que revendiqué dans l'une quelconque des revendications précédentes, **caractérisé en ce que** ledit dispositif de commande est prévu pour entraîner le maintien d'une pression d'air positive au sein de l'espace de logement (13) du bâtiment.

11. Bâtiment équipé d'un système de ventilation tel que revendiqué dans l'une quelconque des revendications précédentes, **caractérisé par** des moyens permettant de retirer l'air de l'espace de logement (13) et un autre échangeur de chaleur permettant d'échanger de la chaleur entre l'air retiré dudit espace de logement (13) et l'air délivré dans ledit espace de logement (13).
